# EUROPÄISCHE PATENTSCHRIFT

(11) **EP 3 434 088 B1**
(45) Veröffentlichungstag und Bekanntmachung des Hinweises auf die Patenterteilung: **14.10.2020**
(21) Anmeldenummer: 18184807.8
(22) Anmeldetag: 20.07.2018
(51) Int. Cl.: A01B 63/16, A01B 73/04

(54) **GEZOGENES LANDWIRTSCHAFTLICHES ARBEITSGERÄT**
PULLED AGRICULTURAL DEVICE
DISPOSITIF AGRICOLE TRACTÉ

(30) Priorität: 24.07.2017 DE 102017116637
(43) Veröffentlichungstag der Anmeldung: 30.01.2019
(73) Patentinhaber: Horsch Maschinen GmbH, 92421 Schwandorf (DE)
(72) Erfinder: HORSCH, Michael, 92421 Schwandorf (DE)
(74) Vertreter: Benninger, Johannes

(56) Entgegenhaltungen:
- EP-A1- 1 935 224
- EP-A2- 1 179 289
- DE-A1-102012 103 570

## Beschreibung

Die vorliegende Erfindung betrifft ein gezogenes landwirtschaftliches Arbeitsgerät mit den Merkmalen des unabhängigen Anspruchs 1.

Ein derartiges gezogenes Arbeitsgerät mit an einem Rahmen angeordneten Bearbeitungswerkzeugen, einer Zugdeichsel und seitlich neben der Zugdeichsel und vor den Bearbeitungswerkzeugen am Rahmen in aufrechter Ebene bewegbar angeordneten Tiefenführungsrädern zur Höhenführung des Rahmens und der Bearbeitungswerkzeuge gegenüber dem Boden geht bereits aus der EP 2 840 880 A1 hervor. Die Tiefenführungsräder sind mit einer Schwenkhalterung um eine aufrechte Schwenkachse frei schwenkbar angeordnet. Um eine vereinfachte und eine einen geringeren Bauraum benötigende Anordnung für die Tiefenführungsräder zu erreichen, ist vorgesehen, dass die Schwenkachse für die Tiefenführungsräder schräg von hinten-oben nach vorne-unten ausgerichtet verläuft. Praxiseinsätze eines derartigen Gerätes haben jedoch gezeigt, dass die freie Drehbarkeit der Tiefenführungsräder um die Schwenkhalterung nur bedingt einsetzbar ist. So folgen die Tiefenführungsräder während einer Vorwärtsfahrt zwar einer Fahrtrichtung des Arbeitsgerätes. Bei einer Rückwärtsfahrt stellen sich die Tiefenführungsräder jedoch quer zur Fahrtrichtung und schaben entlang einer Bodenoberfläche, wodurch diese beschädigt werden kann; zudem können dadurch auch unerwünschte Unebenheiten auf der Ackerfläche erzeugt werden.

Ein weiteres Arbeitsgerät geht aus der DE 10 2012 103 570 A1 hervor, welches einen Tragrahmen mit einer vorderseitig daran angebrachten Zugdeichsel umfasst. An der Rückseite des Tragrahmens ist ein Mittelrahmen mit seitlich daran angebrachten Flügelabschnitten vorgesehen, welche mit Bodenbearbeitungswerkzeugen und mit Tiefenführungsrädern ausgestattet sind. Die Tiefenführungsräder sind jeweils mittels einer Schwenkhalterung an den Flügelabschnitten angeordnet, wobei die Tiefenführungsräder mit der Schwenkhalterung um eine aufrechte Achse frei schwenkbar angeordnet sind, so dass die Schwenkachse für die Tiefenführungsräder schräg von hinten - oben nach vorn - unten ausgerichtet verläuft.

Ein weiteres Arbeitsgerät geht aus der EP 1 179 289 A2 hervor, welches einen Mittelrahmen mit seitlich daran angebrachten Flügelabschnitten umfasst. Am Mittelrahmen und an den Flügelabschnitten sind anhebbare Radzusammenbauten vorgesehen. Den anhebbaren Radzusammenbauten sind Zylinder zugeordnet, welche zum Verschwenken bzw. Anheben der Radzusammenbauten dienen.

Ein weiteres Arbeitsgerät geht aus der EP 1 935 224 A1 hervor. Dieses umfasst einen eine Zugdeichsel bzw. eine Verbindungseinrichtung aufweisenden Zentralrahmen, wobei seitlich zu dem Zentralrahmen um zumindest weitgehend parallel zur Fahrrichtung verlaufende Achsen schwenkbare Seitenrahmen angeordnet sind, wobei am Zentralrahmen und/oder neben der Zugdeichsel wenigstens ein sich über eine Ackerfläche abrollendes Führungselement sowie an den Seitenrahmen in deren vorderen Bereichen jeweils wenigstens ein sich über die Ackerfläche abrollendes Tiefenführungsrad angebracht ist, und wobei das wenigstens eine Führungselement mit einer eine horizontale Drehachse aufweisenden Lagerung am Zentralrahmen befestigt ist, wobei die horizontalen Drehachsen der Führungselemente und der Tiefenführungsräder auf einer Ebene liegen. Durch eine derartige Anordnung der Tiefenführungselemente und der Tiefenführungsräder müssen diese nicht schwenkbar angeordnet sein, da ein Schwenkradius bzw. ein Kurvenradius dieser während einer Kurvenfahrt somit den gleichen Mittelpunkt aufweisen, wodurch es zu keinem Schaben der Führungselemente bzw. der Tiefenführungsräder kommt.

Ein Nachteil ergibt sich hierbei jedoch in der Verwendung von größeren Führungselementen. Insbesondere wenn das Führungselement als sog. Raupenlaufwerk ausgeführt ist, kann es zu einem entsprechenden Versatz der Ebenen des Führungselements und des Tiefenführungsrads kommen, wodurch das Tiefenführungsrad bei Kurvenfahrten entsprechend entlang der Ackerfläche schaben und mitunter auch beschädigt werden kann. Die Tiefenführungsräder sind wiederum so anzuordnen, dass kein Versatz vorliegt, ist in der Regel nicht möglich, da dies entsprechend große Halterungen erfordern würde, welche zum einen Stabilitätsprobleme aufweisen können und zudem dadurch gesetzlich vorgeschriebene Transportmaße nicht mehr eingehalten werden könnten.

Es ist somit eine Aufgabe der Erfindung, ein gezogenes landwirtschaftliches Arbeitsgerät zu schaffen, mit dem Nachteile herkömmlicher Techniken vermieden werden. Der Erfindung liegt insbesondere die Aufgabe zugrunde, eine Möglichkeit zu schaffen, ein Arbeitsgerät mit Führungselementen mit großer Aufstandsfläche zu schaffen und zugleich für die Tiefenführungsräder eine kompakte Rahmenkonstruktion zu erreichen.

Diese Aufgaben werden durch ein gezogenes landwirtschaftliches Arbeitsgerät mit den Merkmalen des unabhängigen Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein gezogenes landwirtschaftliches Arbeitsgerät mit einem eine Verbindungseinrichtung bspw. in Form einer Zugdeichsel oder einer Zugöse oder dergl. aufweisenden Zentralrahmen bereitgestellt, wobei seitlich zum Zentralrahmen um parallel zur Fahrrichtung oder schräg im Raum verlaufende Achsen schwenkbare Seitenrahmen angeordnet sind, wobei am Zentralrahmen und/oder neben der Verbindungseinrichtung wenigstens ein sich über eine Ackerfläche abrollendes Führungselement sowie am Seitenrahmen in dessen vorderem Bereich jeweils wenigstens ein sich über die Ackerfläche abrollendes Tiefenführungsrad angebracht ist/sind. Über die Verbindungseinrichtung bspw. in Form einer Zugdeichsel oder einer Zugöse oder dergleichen kann das landwirtschaftliche Arbeitsgerät mit einem landwirtschaftlichen Zugfahrzeug verbunden bzw. an ein solches Zugfahrzeug angehängt werden. Zum Bevorraten und Mittführen eines auszubringenden Verteilguts, wie bspw. Saatgut, Dünger oder dergl. kann am Zentralrahmen zusätzlich ein Vorratsbehälter angebaut sein.

Die Seitenrahmen können hierbei jeweils direkt am Zentralrahmen oder an einen Zwischenrahmen oder an einen Schwenkrahmen oder dergl. angebaut sein, welcher Zwischenrahmen oder Schwenkrahmen wiederum mit dem Zentralrahmen verbunden sein kann. Auch können die den Seitenrahmen in deren vorderen Bereich zugeordneten Tiefenführungsräder den Seitenrahmen vorgeordnet oder seitlich zu diesen angeordnet sein. Insbesondere sind die Tiefenführungsräder den am Seitenrahmen zugeordneten Arbeitswerkzeugen vorgeordnet, wobei die Arbeitswerkzeuge bspw. als Säschare ausgeführt sein können. Die Tiefenführungsräder können wahlweise auch seitlich oder zwischen den Arbeitswerkzeugen angebracht sein.

Das Führungselement ist um eine erste Drehachse und das Tiefenführungsrad ist um eine zweite Drehachse drehbar gelagert. Da das Führungselement erfindungsgemäß eine große Aufstandsfläche bzw. einen großen Durchmesser aufweist und das Tiefenführungsrad kompakt an den Seitenrahmen angebaut ist, weisen die erste Drehachse und die zweite Drehachse einen axialen Versatz zueinander auf. Um diesen axialen Versatz der Führungselemente und der Tiefenführungsräder auszugleichen, ist vorgesehen, die Tiefenführungsräder mit einer Schwenkhalterung um eine aufrechte Schwenkachse schwenkbar zu lagern, wobei die Tiefenführungsräder mittels einer eine zweite Drehachse aufweisenden Lagerung schwenkbar an der Schwenkhalterung befestigt sind und die zweite Drehachse der Tiefenführungsräder in der Ebene oder angrenzend an die Ebene der Schwenkachse liegt und wobei das wenigstens eine Führungselement mit einer eine erste Drehachse aufweisenden Lagerung am Zentralrahmen befestigt ist, wobei die Drehachsen hierbei einen axialen Versatz zueinander aufweisen.

Die erste Drehachse und die zweite Drehachse können eine horizontale quer zur Fahrtrichtung orientierte Ausrichtung aufweisen. Auch können diese quer zur Fahrtrichtung in einem Winkel orientiert sein bzw. auch schräg im Raum und quer zur Fahrtrichtung verlaufen. Hierbei verlaufen die erste Drehachse und die zweite Drehachse in einer Geradeausfahrt des landwirtschaftlichen Arbeitsgerätes parallel und weisen während einer Kurvenfahrt jeweils unterschiedliche Winkel bzw. Ausrichtungen in Bezug auf die Fahrrichtung auf. Insbesondere weisen auch die an den jeweiligen Seitenrahmen angeordneten Tiefenführungsräder während einer Kurvenfahrt unterschiedliche Ausrichtungen zueinander auf, wobei diese Ausrichtungen jeweils durch die um eine aufrechte Schwenkachse schwenkbare Anordnung der Tiefenführungsräder entsprechend kompensiert werden bzw. diese Ausrichtung jeweils durch die Schwenkbarkeit erreicht wird.

Um zum einen durch eine Schwenkbewegung der Tiefenführungsräder keine Veränderung der Arbeitstiefe zu erhalten sowie um eine möglichst große Laufruhe zu erhalten, ist eine angrenzende Anordnung der zweiten Drehachse bzw. der Drehachse der Tiefenführungsräder in Bezug auf die Schwenkachse vorgesehen. Insbesondere schneiden sich die Schwenkachse und die zweite Drehachse. Hierbei gilt: Je größer der Abstand zwischen der zweiten Drehachse und der Schwenkachse ist, desto größer ist auch ein durch eine Schwenkbewegung der Tiefenführungsräder hervorgerufener Höhenunterschied.

Die Laufruhe der Tiefenführungsräder während einer Vorwärtsfahrt kann zudem dadurch verbessert werden, indem die Schwenkachse der Tiefenführungsräder von hinten-oben nach vorne-unten ausgerichtet bzw. orientiert verläuft, wobei diese Ausrichtung insbesondere einen Winkel beinhaltet, der größer 15° ist und der kleiner 75° ist. Vorzugsweise kann der Winkel in einer Größenordnung von etwa 30° liegen, insbesondere genau 30° betragen. Damit ist gemeint, dass die Schwenkachse der Tiefenführungsräder gegenüber einer vertikalen Achse geneigt ist, wobei diese Neigung insbesondere zwischen 15° und 75° liegen kann.

Um sowohl bei einer Vorwärtsfahrt als auch bei einer Rückwärtsfahrt keine Querstellung der Tiefenführungsräder zu erhalten, ist zudem vorgesehen, dass die um eine aufrechte Schwenkachse schwenkbaren Tiefenführungsräder während einer Vorwärtsfahrt des Arbeitsgerätes frei schwenkbar sind und dass die um eine aufrechte Schwenkachse schwenkbaren Tiefenführungsräder während einer Rückwärtsfahrt mittels eines Begrenzungselements in eine zumindest weitgehend parallele Ausrichtung zum wenigstens einen Führungselement gebracht werden. Auch eine parallele Ausrichtung zur Fahrtrichtung wäre denkbar, wobei die Ausrichtung des Führungselements insbesondere der Fahrtrichtung entspricht.

Eine große Aufstandsfläche der Führungselemente und/oder der Tiefenführungsräder lässt sich insbesondere durch die Verwendung von Raupenlaufwerken bzw. Raupenbändern erreichen, wobei derartige Raupenlaufwerke bzw. Raupenbänder aufgrund des damit verbundenen erhöhten vorhandenen Gewichts insbesondere als Führungselemente verwendet werden. Jedoch könnten auch Räder oder Rollen mit einem entsprechend großen Durchmesser verwendet werden. Hierbei können der Durchmesser der Räder oder Rollen bzw. die Länge und die Breite der Raupenlaufwerke wiederum entsprechend des jeweiligen vorhandenen Gewichts angepasst sein.

Der Schwenkwinkel kann zudem auch in einer Vorwärtsfahrt in zumindest eine Drehrichtung begrenzt sein, wobei dieser Schwenkwinkel jeweils in Abhängigkeit des Versatzes zwischen der ersten horizontalen Drehachse zur zweiten horizontalen Drehachse ist. Der Schwenkwinkel ist hierbei insbesondere derart gewählt, dass Lenkbewegungen des Arbeitsgerätes ohne ein Schaben der Tiefenführungsräder ausgeführt werden können.

Um eine einfache Ausgestaltung des Begrenzungselements zu erhalten, kann dieses Begrenzungselement bspw. als Aktor, so etwa in Form eines Linearantriebs ausgeführt sein. Der Aktor kann insbesondere ein elektrisch, pneumatisch oder hydraulisch betriebener Aktor sein. Gemäß einem hervorgehobenen Ausführungsbeispiel kann der Aktor ein hydraulisch betriebener Aktor sein, der über ein elektrisch ansteuerbares Hydraulikventil steuerbar ist. Das Hydraulikventil kann z. B. ein herkömmliches Magnetventil sein.

Das Begrenzungselement kann sowohl als ein in zwei Richtungen frei beweglicher Aktor als auch in zwei Richtungen sperrbarer Aktor ausgeführt sein, so bspw. als doppeltwirkender Zylinder. In Abhängigkeit vom jeweiligen Lenkwinkel während einer Rückwärtsfahrt könnte bei dem Aktor bzw. dem doppeltwirkenden Zylinder die jeweilige Seite bzw. der jeweilige Lenkwinkel der Tiefenführungsräder begrenzt sein und ebenso das Tiefenführungsrad mit Hilfe des Aktors bzw. mit Hilfe des doppeltwirkenden Zylinders in eine zumindest annähernd parallele Ausrichtung in Bezug auf das Führungselement gebracht werden.

Eine kompakte und einfache Bauweise sowie eine vereinfachte Tiefenverstellung des Arbeitsgerätes lassen sich insbesondere dadurch erreichen, dass die Tiefenführungsräder in deren Höhe verstellbar sind. Hierbei können in die Schwenkhalterung bspw. ein Linearantrieb und/oder ein Spindelantrieb integriert sein. Insbesondere wäre es denkbar, dass der Linearantrieb und/oder der Spindelantrieb zudem die Schwenkhalterung bzw. die Lagerung der Schwenkhalterung bilden. Auch kann die Schwenkhalterung in einen höhenverstellbar zum Seitenrahmen angebauten Anbaubock integriert sein.

Zur Bestimmung einer Vorwärts- oder Rückwärtsfahrt kann am Arbeitsgerät ein Messmittel angebracht sein. Bspw. kann ein solches Messmittel oder eine solche Messvorrichtung eine Drehbewegung der Tiefenführungsräder und/oder der Führungselemente detektieren. Auch kann mittels eines Messmittels ermittelt werden, ob sich das Arbeitsgerät entlang einer Linkskurve oder einer Rechtskurve bewegt. Auch kann ein entsprechender Kurvenradius oder ein entsprechender Lenkwinkel oder Schwenkwinkel mittels eines Messmittels erfasst werden. In Abhängigkeit der mittels der oder des Messmittels ermittelten Fahrbewegungen des Arbeitsgerätes kann zudem das Begrenzungselement angesteuert werden, wobei hierfür eine hydraulische und/oder elektrische und/oder pneumatische Steuerung oder eine Kombination dieser am Arbeitsgerät vorgesehen sein können.

Es sei angemerkt, dass im Sinne der Erfindung der Begriff "Steuerung" als Oberbegriff für jegliche Art der Einflussnahme auf den Aktor bzw. das Begrenzungselement verstanden wird, wobei der Begriff "Steuerung" auch eine "Regelung" umfassen kann, da eine Regelung eine Steuerung mit einer Rückkopplung der gesteuerten Größe ist. Die Steuerung kann somit auch als Regler, insbesondere zur Regelung des Aktors, ausgeführt sein.

Zudem könnte das Begrenzungselement jedoch auch manuell durch eine Bedienperson entsprechend bedient bzw. ein entsprechendes Ventil durch eine Bedienperson betätigt werden.

Um die Lenkungseigenschaften des Arbeitsgerätes noch weiter zu verbessern, kann zudem vorgesehen sein, dass auch das Führungselement lenkbar ist bzw. dass auch das Führungselement um eine aufrechte Achse schwenkbar zum Zentralrahmen an diesem angebracht ist. Hierbei weisen auch wiederum das Führungselement und die Tiefenführungsräder während einer Kurvenfahrt unterschiedliche Lenkwinkel auf. Zur Anpassung der Lenkbewegungen der Führungselemente kann auch ein Aktor bzw. ein Linearelement vorgesehen sein.

Gemäß einem konkreteren Ausführungsbeispiel kann das Arbeitsgerät einen Zentralrahmen umfassen, an welchem vorderen Bereich sich eine Verbindungseinrichtung in Form einer Zugöse zur Verbindung des Arbeitsgeräts mit einem hier nicht dargestellten Zugfahrzeug, befindet. Zum Bevorraten und Mitführen eines auszubringenden Verteilguts, wie bspw. Saatgut, Dünger oder dergl. kann am Zentralrahmen zusätzlich ein Vorratsbehälter angebaut sein. Neben dem Zentralrahmen können in Fahrrichtung des Arbeitsgeräts links und rechts zudem sich über eine Ackerfläche abrollende Führungselemente angebracht sein, wobei die Führungselemente beispielsweise als Raupenlaufwerk ausgebildet sind. Zudem kann das Führungselement mittels einer eine erste Drehachse aufweisenden Lagerung am Zentralrahmen befestigt sein, wobei das Führungselement um diese Lagerung aus schwenkbar angeordnet sein kann, um somit eine verbesserte Bodenanpassung zu erhalten. Darüber hinaus können den Seitenrahmen jeweils ein mittels eines Zylinders höhenverstellbares Tiefenführungsrad zur Führung der Seitenrahmen bzw. der Arbeitswerkzeuge entlang einer Ackerfläche zugeordnet sein.

Nachfolgend werden einige Funktionszusammenhänge der Erfindung bei Kurvenfahrt beschrieben: Die erste Drehachse der Führungselemente kann sich jeweils in deren Mitte befinden. Links und rechts zum Zentralrahmen können sich Seitenrahmen erstrecken, wobei den Seitenrahmen wiederum ein über eine aufrechte Schwenkachse schwenkbar angeordnetes Tiefenführungsrad zugeordnet ist. Zudem können die Tiefenführungsräder über zweite Drehachsen drehbar gelagert sein. Um die jeweiligen Schwenkwinkel α der Tiefenführungsräder zu ermitteln, können jeweils ausgehend vom Zentrum des Kurvenradius Linien zum Mittelpunkt der Schwenkachsen gezogen werden, wobei während einer Kurvenfahrt die Orientierung der Tiefenführungsräder jeweils weitgehend senkrecht zu diesen ist. Die Tiefenführungsräder können zum einen mit einer unterbrochenen Linienführung und zum anderen mit einer durchgehenden Linienführung dargestellt werden, wobei die unterbrochene Linienführung eine Geradeausfahrt bzw. eine Rückwärtsfahrt darstellt, und wobei die durchgehende Linienführung jeweils eine Kurvenfahrt darstellt. Zudem ist der jeweils im Kurveninneren liegende Schwenkwinkel jeweils größer als der Außenliegende.

Ausgehend davon können sich beispielsweise folgende Maße bzw. Schwenkwinkel α der Tiefenführungsräder während einer Kurvenfahrt ergeben: Zunächst können die erste Drehachse und die zweiten Drehachse bspw. einen axialen Versatz von 600 mm aufweisen. Zudem kann das Arbeitsgerät bspw. eine Arbeitsbreite von 18 Meter aufweisen. Bezogen auf einen Kurvenradius von 9 Meter kann sich somit für das in Fahrrichtung links angeordnete Tiefenführungsrad ein Schwenkwinkel α gegenüber einer Geradeausfahrt von 15° ergeben, wohingegen das in Fahrrichtung rechts angeordnete Tiefenführungsrad einen Schwenkwinkel α gegenüber einer Geradeausfahrt von 2° aufweisen kann.

Dementgegen kann sich bei einem axialen Versatz der ersten Drehachse zur zweiten Drehachse von bspw. 1150 mm, bei ansonsten jedoch gleicher Arbeitsbreite von 18 Meter und gleichem Kurvenradius von 9 Meter für das in Fahrrichtung angeordnete linke Tiefenführungsrad ein Schwenkwinkel α gegenüber einer Geradeausfahrt von 27° ergeben, wohingegen das in Fahrrichtung rechts angeordnete Tiefenführungsrad einen Schwenkwinkel α gegenüber einer Geradeausfahrt von 4° aufweisen kann. Dadurch kann deutlich gemacht werden, dass der Schwenkwinkel α neben dem Kurvenradius zudem abhängig vom jeweiligen Versatz zwischen der ersten Drehachse des Führungselements zur zweiten Drehachse der Tiefenführungsräder ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Fig. 1A: eine Perspektivansicht einer Ausführungsvariante eines erfindungsgemäßen gezogenen landwirtschaftlichen Arbeitsgeräts;
- Fig. 1B: eine Seitenansicht des gezogenen landwirtschaftlichen Arbeitsgeräts gemäß Fig. 1A;
- Figuren 2A und 2B: eine schematische Draufsicht eines gezogenen landwirtschaftlichen Arbeitsgeräts, wobei jeweils die zu einem Kurvenradius gehörenden Schwenkwinkel der Tiefenführungsräder dargestellt werden; und
- Figuren 3A bis 3D: eine Ausführungsvariante eines Tiefenführungsrads zur Verwendung in einem gezogenen landwirtschaftlichen Arbeitsgeräts, in einer Perspektivansicht (Fig. 3A), in einer Perspektivansicht im Schnitt (Fig. 3B); in einer Seitenansicht von links mit Rad (Fig. 3C) und in einer Seitenansicht von rechts ohne Rad (Fig. 3D).

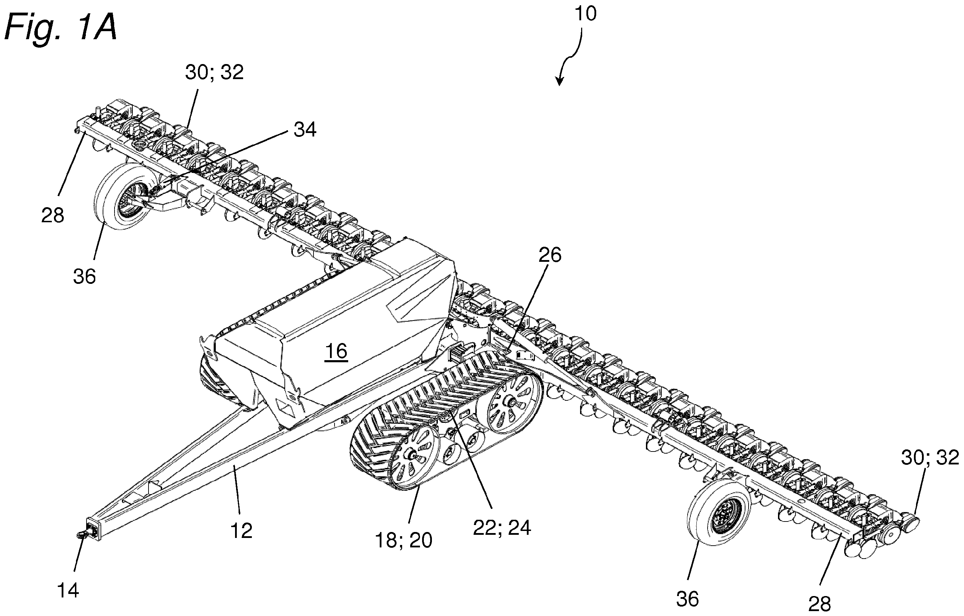

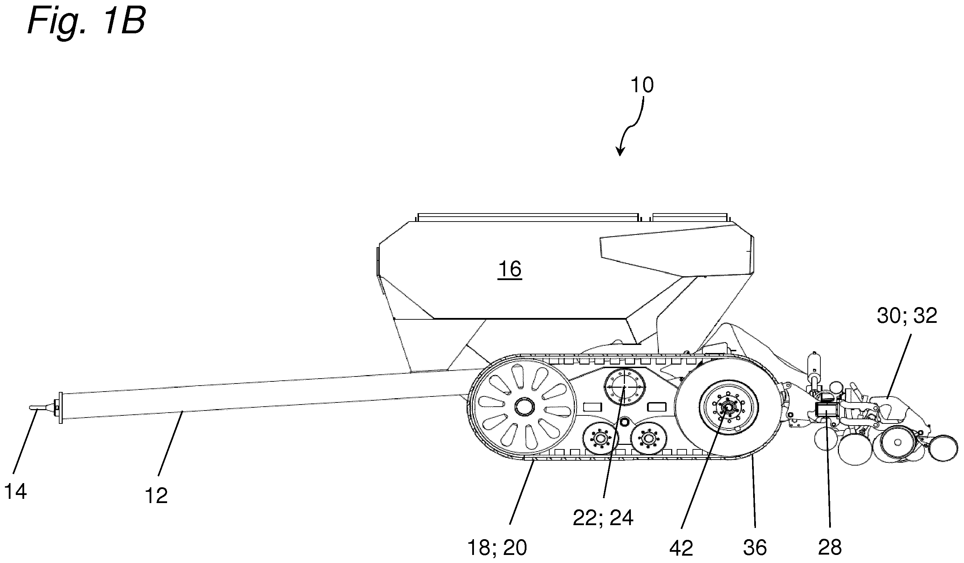

Für gleiche oder gleich wirkende Elemente der Erfindung werden in den Figuren 1 bis 3D jeweils identische Bezugszeichen verwendet. Ferner werden der besseren Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße gezogene landwirtschaftliche Arbeitsgerät ausgestaltet sein kann und stellen keine abschließende Begrenzung dar.

Eine Ausführungsvariante eines gezogenen landwirtschaftlichen Arbeitsgeräts 10 geht aus den Figuren 1 hervor. Das Arbeitsgerät 10 umfasst einen Zentralrahmen 12 an welchem vorderen Bereich sich eine Verbindungseinrichtung 14 in Form einer Zugöse zur Verbindung des Arbeitsgeräts 10 mit einem hier nicht dargestellten Zugfahrzeug, befindet. Zum Bevorraten und Mitführen eines auszubringenden Verteilguts, wie bspw. Saatgut, Dünger oder dergl. ist am Zentralrahmen 12 zusätzlich ein Vorratsbehälter 16 angebaut. Neben dem Zentralrahmen 12 sind links und rechts zudem sich über eine Ackerfläche abrollende Führungselemente 18 angebracht, wobei die Führungselemente 18 im Ausführungsbeispiel der Fig. 1 als Raupenlaufwerk 20 ausgebildet sind. Zudem ist das Führungselement 18 mittels einer eine erste Drehachse 22 aufweisenden Lagerung 24 am Zentralrahmen 12 befestigt, wobei das Führungselement 18 um diese Lagerung 24 aus schwenkbar angeordnet sein kann, um somit eine verbesserte Bodenanpassung zu erhalten.

Zudem erstrecken sich seitlich an dem Zentralrahmen 12 um zumindest weitgehende parallel zur Fahrtrichtung verlaufenden Achsen 26 schwenkbare Seitenrahmen 28, an welchen in regelmäßigen Abständen zueinander eine Mehrzahl von Arbeitswerkezeugen 30 angeordnet sind, welche Arbeitswerkzeuge 30 bspw. als Säschare 32 ausgeführt sind. Es sei darauf hingewiesen, dass die Seitenrahmen 28 nicht direkt mit dem Zentralrahmen 12 verbunden sind, sondern dass zwischen diesen ein zusätzlicher Schwenkrahmen angebracht ist, wobei auf diesen Schwenkrahmen auch verzichtet werden könnte, so dass eine direkte Verbindung zwischen den Seitenrahmen 28 und dem Zentralrahmen 12 vorhanden ist.

Darüber hinaus ist den Seitenrahmen 28 jeweils ein mittels eines Zylinders 34 höhenverstellbares Tiefenführungsrad 36 zur Führung der Seitenrahmen 28 bzw. der Arbeitswerkzeuge 30 entlang einer Ackerfläche zugeordnet.

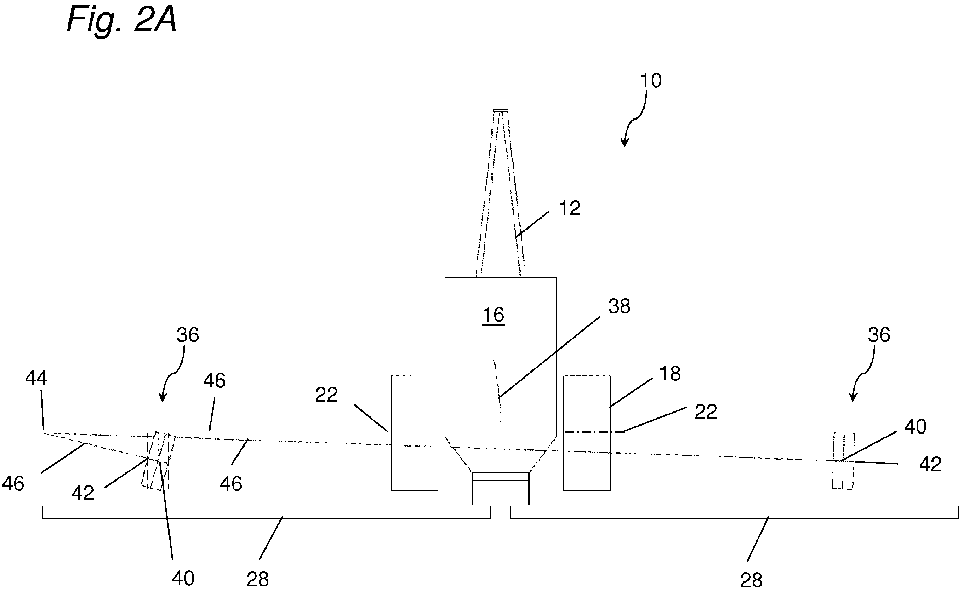

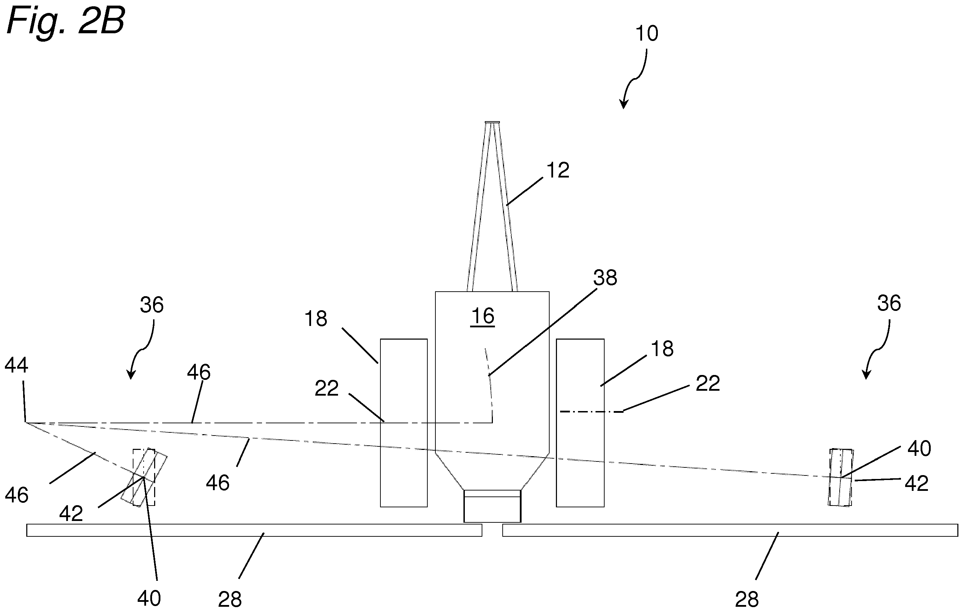

Die jeweiligen Funktionszusammenhänge der Erfindung gehen aus den schematischen Draufsichten der Figuren 2 nochmals hervor. Diese zeigen jeweils verschiedene Ausführungsformen von Arbeitsgeräten 10, wobei deren Führungselemente 18 verschiedene Längen aufweisen und wobei zudem jeweils verschiedene Kurvenradien 38 skizziert sind, welche jeweils eine Kurvenfahrt des Arbeitsgerätes 10 darstellen. Die erste Drehachse 22 der Führungselemente 18 befindet sich jeweils in deren Mitte. Der Kurvenradius 38 deutet eine Linkskurve an, d.h. dass das Arbeitsgerät 10 jeweils gegen den Uhrzeigersinn bewegt wird. Links und rechts zum Zentralrahmen 12 erstrecken sich Seitenrahmen 28, wobei den Seitenrahmen 28 wiederum ein über eine aufrechte Schwenkachse 40 schwenkbar angeordnetes Tiefenführungsrad 36 zugeordnet ist. Zudem sind die Tiefenführungsräder 36 über zweite Drehachsen 42 drehbar gelagert. Um die jeweiligen Schwenkwinkel α der Tiefenführungsräder 36 zu ermitteln, werden jeweils ausgehend vom Zentrum 44 des Kurvenradius 38 Linien 46 zum Mittelpunkt der Schwenkachsen 40 gezogen, wobei während einer Kurvenfahrt die Orientierung der Tiefenführungsräder 36 jeweils weitgehend senkrecht zu diesen Linien ist. Die Tiefenführungsräder sind zum einen mit einer unterbrochenen Linienführung und zum anderen mit einer durchgehenden Linienführung dargestellt, wobei die unterbrochene Linienführung eine Geradeausfahrt bzw. eine Rückwärtsfahrt darstellt, und wobei die durchgehende Linienführung jeweils eine Kurvenfahrt darstellt. Zudem ist der jeweils im Kurveninneren liegende Schwenkwinkel jeweils größer als der Außenliegende.

Bezogen auf die Fig. 2A können sich somit bspw. folgende Maße bzw. Schwenkwinkel α der Tiefenführungsräder während einer Kurvenfahrt ergeben. Zunächst weisen die erste Drehachse 22 und die zweiten Drehachse 42 bspw. einen axialen Versatz von 600 mm auf. Zudem hat das Arbeitsgerät 10 bspw. eine Arbeitsbreite von 18 Meter. Bezogen auf einen Kurvenradius 38 von 9 Meter ergibt sich somit für das in der Draufsicht der Fig. 2A links befindende Tiefenführungsrad 36 ein Schwenkwinkel α gegenüber einer Geradeausfahrt von 15°, wohingegen das in der Draufsicht der Fig. 2A rechts befindende Tiefenführungsrad 36 einen Schwenkwinkel α gegenüber einer Geradeausfahrt von 2° aufweist.

Dementgegen ergeben sich bei einem axialen Versatz der ersten Drehachse 22 zur zweiten Drehachse 42 von bspw. 1150 mm, bei ansonsten jedoch gleicher Arbeitsbreite von 18 Meter und einen gleichen Kurvenradius 38 von 9 Meter für das in der Draufsicht der Fig. 2B links befindende Tiefenführungsrad 36 ein Schwenkwinkel α gegenüber einer Geradeausfahrt von 27°, wohingegen das in der Draufsicht der Fig. 2A rechts befindende Tiefenführungsrad 36 einen Schwenkwinkel α gegenüber einer Geradeausfahrt von 4°. Dadurch wird wiederum ersichtlich, dass der Schwenkwinkel α neben dem Kurvenradius 38 zudem abhängig vom jeweiligen Versatz zwischen der ersten Drehachse 22 des Führungselements 18 und der zweiten Drehachse 42 der Tiefenführungsräder 36 ist.

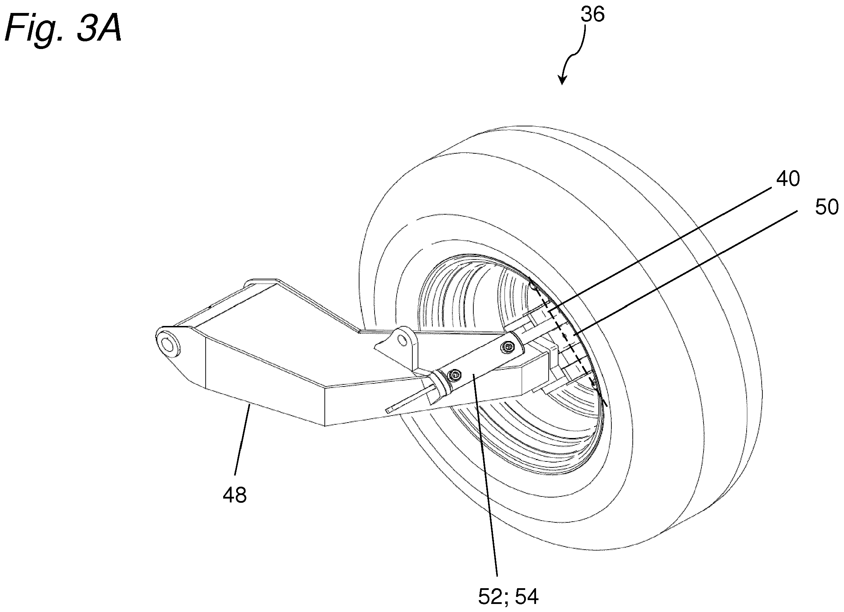

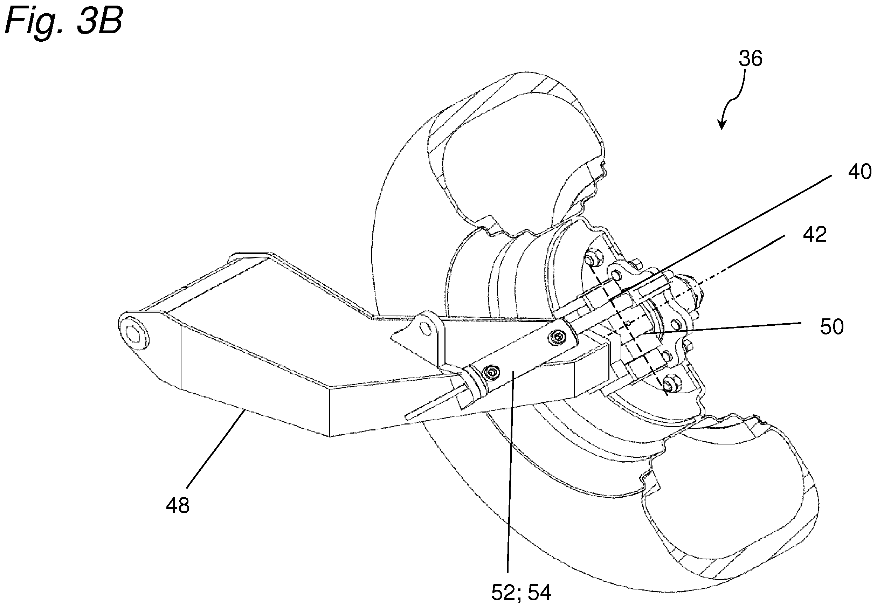

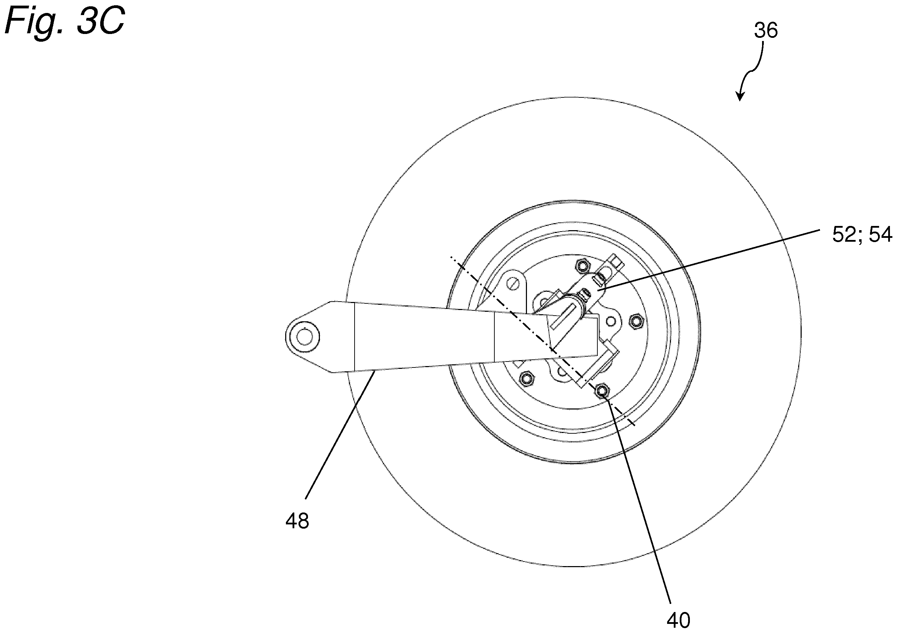

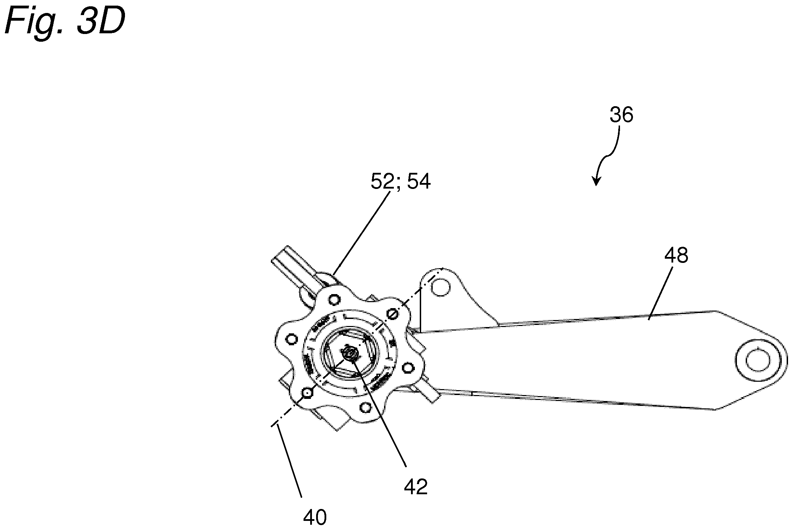

Eine Ausführungsvariante eines Tiefenführungsrades 36 und deren Aufhängungsbock 48 gehen aus den Figuren 3 hervor. Die Tiefenführungsräder 36 sind jeweils schwenkbar an einer Schwenkhalterung 50 montiert, wobei die Schwenkachse 40 der Schwenkhalterung 50 von hinten-oben nach vorne-unten orientiert ist und bspw. einen Winkel von 30° aufweist. Zudem ist, um einerseits durch eine Schwenkbewegung der Tiefenführungsräder 36 keine Veränderung der Arbeitstiefe zu erhalten und um andererseits eine möglichst große Laufruhe zu erhalten, eine angrenzende Anordnung der zweiten Drehachse 42 der Tiefenführungsräder 36 in Bezug auf die Schwenkachse 40 vorgesehen. Hierbei schneidet sich jeweils die zweite Drehachse 42 und die Schwenkachse 40 im Ausführungsbeispiel der Figuren 3 (vgl. Fig. 3B und Fig. 3D).

Um sowohl bei einer Vorwärtsfahrt als auch bei einer Rückwärtsfahrt keine Querstellung der Tiefenführungsräder 36 zu erhalten, ist zudem vorgesehen, dass die um eine aufrechte Schwenkachse 40 schwenkbaren Tiefenführungsräder 36 während einer Vorwärtsfahrt des Arbeitsgerätes 10 frei schwenkbar sind und dass die um eine aufrechte Schwenkachse 40 schwenkbaren Tiefenführungsräder 36 während einer Rückwärtsfahrt mittels eines Begrenzungselements 52 in eine zumindest weitgehend parallele Ausrichtung zum wenigstens einen Führungselement 18 gebracht werden.

Um eine einfache Ausgestaltung des Begrenzungselements 52 zu erhalten, ist dieses als Aktor 54 bspw. in Form eines Linearantriebs ausgeführt. Der Aktor 54 ist insbesondere ein elektrisch, pneumatisch oder hydraulisch betriebener Aktor 54. Gemäß einem hervorgehobenen Ausführungsbeispiel kann der Aktor 54 ein hydraulisch betriebener Aktor 54 sein, der über ein elektrisch ansteuerbares Hydraulikventil steuerbar ist. Das Hydraulikventil kann z. B. ein herkömmliches Magnetventil sein.

Das Begrenzungselement 52 kann sowohl als ein in zwei Richtungen frei beweglicher als auch ein in zwei Richtungen sperrbarer Aktor 54 ausgeführt sein, so bspw. als doppeltwirkender Zylinder. In Abhängigkeit vom jeweiligen Kurvenradius 38 bzw. vom jeweiligen Schwenkwinkel α während einer Rückwärtsfahrt könnte bei diesem Aktor 54 (bzw. dem doppeltwirkenden Zylinder) die jeweilige Seite bzw. der jeweilige Schwenkbereich der Tiefenführungsräder 36 begrenzt sein und ebenso das Tiefenführungsrad 36 mittels des Aktors 54 in eine zumindest annähernd parallele Ausrichtung in Bezug auf das Führungselement 18 gebracht werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Arbeitsgerät
- 12: Zentralrahmen
- 14: Verbindungseinrichtung
- 16: Vorratsbehälter
- 18: Führungselement
- 20: Raupenlaufwerk
- 22: Erste Drehachse
- 24: Lagerung
- 26: Achse
- 28: Seitenrahmen
- 30: Arbeitswerkzeug
- 32: Säschar
- 34: Zylinder
- 36: Tiefenführungsrad
- 38: Kurvenradius
- 40: Schwenkachse
- 42: Zweite Drehachse
- 44: Zentrum
- 46: Linie
- 48: Aufhängungsbock
- 50: Schwenkhalterung
- 52: Begrenzungselement
- 54: Aktor

- α: Schwenkwinkel

## Patentansprüche

1. Ziehbares landwirtschaftliches Arbeitsgerät (10) mit einem eine Verbindungseinrichtung (14) aufweisenden Zentralrahmen (12), wobei seitlich zum Zentralrahmen (12) um parallel zur Fahrrichtung und/oder schräg im Raum verlaufende Achsen (26) schwenkbare Seitenrahmen (28) angeordnet sind, wobei am Zentralrahmen (12) und/oder neben der Verbindungseinrichtung (14) wenigstens ein auf einer Ackerfläche abrollendes Führungselement (18) sowie am Seitenrahmen (28) jeweils wenigstens ein auf der Ackerfläche abrollendes Tiefenführungsrad (36) angebracht ist, welche Tiefenführungsräder (36) mit einer Schwenkhalterung (50) um eine aufrechte Schwenkachse (40) schwenkbar gelagert sind, wobei die Tiefenführungsräder (36) mittels jeweils eine zweite Drehachse (42) aufweisende Lagerungen an der Schwenkhalterung (50) befestigt sind und die zweite Drehachse (42) der Tiefenführungsräder (36) in der Ebene oder angrenzend an die Ebene der Schwenkachse (40) liegt, und wobei das wenigstens eine Führungselement (18) mit einer eine erste Drehachse (22) aufweisenden Lagerung (24) am Zentralrahmen (12) befestigt ist, wobei die erste Drehachse (22) und die zweite horizontale Drehachse (42) einen axialen Versatz zueinander aufweisen, **dadurch gekennzeichnet, dass** das Arbeitsgerät (10) derart eingerichtet ist, dass die um eine aufrechte Schwenkachse (40) schwenkbaren Tiefenführungsräder (36) während einer Vorwärtsfahrt des Arbeitsgerätes (10) frei schwenkbar sind und dass die um eine aufrechte Schwenkachse (40) schwenkbaren Tiefenführungsräder (36) während einer Rückwärtsfahrt mittels eines Begrenzungselements (52) in eine zumindest weitgehend parallele Ausrichtung zum wenigstens einen Führungselement (18) gebracht werden.

2. Arbeitsgerät nach Anspruch 1, **dadurch gekennzeichnet, dass** die aufrechte Schwenkachse (40) der Tiefenführungsräder (36) von hinten -oben nach vorne-unten ausgerichtet verläuft, und/oder dass die Schwenkachse (40) der Tiefenführungsräder (36) jeweils gegenüber einer vertikalen Achse geneigt ist, wobei diese Neigung insbesondere zwischen 15° und 75° beträgt.

3. Arbeitsgerät nach Anspruch 1 oder 2, **dadurch gekennzeichnet, dass** der Schwenkwinkel α der um eine aufrechte Schwenkachse (40) schwenkbaren Tiefenführungsräder (36) während einer Vorwärtsfahrt des Arbeitsgerätes (10) zumindest in eine Drehrichtung begrenzt wird, wobei der Schwenkwinkel α umso größer ist, je größer der Versatz der ersten horizontalen Drehachse (22) zur zweiten horizontalen Drehachse (42) ist.

4. Arbeitsgerät nach einem der vorhergehenden Ansprüche, **dadurch gekennzeichnet, dass** das Begrenzungselement (52) als Linearantrieb ausgeführt ist.

5. Arbeitsgerät nach einem der vorhergehenden Ansprüche, **dadurch gekennzeichnet, dass** das wenigstens eine Führungselement (18) als Raupenlaufwerk (20) ausgeführt ist.

6. Arbeitsgerät nach einem der vorhergehenden Ansprüche, **dadurch gekennzeichnet, dass** die Tiefenführungsräder (36) in deren Höhe verstellbar sind.

7. Arbeitsgerät nach einem der vorhergehenden Ansprüche, **dadurch gekennzeichnet, dass** der Schwenkhalterung (50) der Tiefenführungsräder (36) ein Linearantrieb und/oder ein Spindelantrieb zugeordnet ist.

8. Arbeitsgerät nach einem der vorhergehenden Ansprüche, **dadurch gekennzeichnet, dass** am Arbeitsgerät (10) ein Messmittel zur Detektion einer Vorwärtsfahrt oder Rückwärtsfahrt angebracht ist und dass das Begrenzungselement (52) auf Basis der detektierten Vorwärtsfahrt oder Rückwärtsfahrt ansteuerbar ist.

9. Arbeitsgerät nach einem der vorhergehenden Ansprüche, **dadurch gekennzeichnet, dass** das wenigstens eine Führungselement (18) um eine aufrechte Schwenkachse (40) schwenkbar am Zentralrahmen (12) angebracht ist, wobei das wenigstens eine Führungselement (18) und die Tiefenführungsräder (36) während einer Kurvenfahrt unterschiedliche Schwenkwinkel α aufweisen.

10. Arbeitsgerät nach einem der vorhergehenden Ansprüche, **dadurch gekennzeichnet, dass** die erste Drehachse (22) und die zweite Drehachse (42) eine horizontale quer zur Fahrrichtung orientiere Ausrichtung aufweisen oder dass diese quer zur Fahrrichtung orientiert sind oder dass diese eine schräg im Raum und quer zur Fahrtrichtung orientierte Ausrichtung aufweisen.

## Claims

1. A towable agricultural implement (10) with a central frame (12) having a coupling device (14), wherein swivelable side frames (28) are disposed laterally of the central frame (12) about axles (26) running parallel to the driving direction and/or diagonal in space, wherein at least one guide element (18) to roll off on a field is mounted on the central frame (12) and/or next to the coupling device (14), and also in each case at least one depth control wheel (36) to roll off on a field is mounted on the side frame (28), which depth control wheels (36) are mounted with a swivel mount (50) to be swivelable about an upright swivel axle (40), wherein the depth control wheels (36) are fastened to the swivel mount (50) by means of bearings that each have a second axis of rotation (42) and the second axis of rotation (42) of the depth control wheels (36) lies in the plane or adjacent to the plane of the swivel axle (40), and wherein the at least one guide element (18) is fastened to the central frame (12) with a bearing (24) that has a first axis of rotation (22), wherein the first axis of rotation (22) and the second horizontal axis of rotation (42) have an axial offset in relation to each other, **characterised in that** the implement (10) is arranged such that the depth control wheels (36), which are swivelable about an upright swivel axle (40), are freely swivelable during a forward drive of the implement (10) and **in that** the depth control wheels (36), which are swivelable about an upright swivel axle (40), are brought into an at least largely parallel alignment with the at least one guide element (18) by means of of a limiting element (52) during a backward drive.

2. The implement according to claim 1, **characterised in that** the upright swivel axle (40) of the depth control wheels (36) runs aligned from the rear top to the front bottom, and/or **in that** the swivel axle (40) of the depth control wheels (36) is in each case inclined in relation to a vertical axis, wherein this inclination is, in particular, between 15° and 75°.

3. The implement according to claim 1 or 2, **characterised in that** the swivel angle α of the depth control wheels (36), which are swivelable about an upright swivel axle (40), is limited at least in one direction of rotation during a forward drive of the implement (10), wherein the swivel angle α is greater the greater is the offset of the first horizontal axis of rotation (22) in relation to the second horizontal axis of rotation (42).

4. The implement according to one of the previous claims, **characterised in that** the limiting element (52) is designed as linear actuator.

5. The implement according to one of the previous claims, **characterised in that** the at least one guide element (18) is designed as caterpillar drive (20).

6. The implement according to one of the previous claims, **characterised in that** the depth control wheels (36) are adjustable in their height.

7. The implement according to one of the previous claims, **characterised in that** a linear actuator and/or a spindle drive is/are assigned to the swivel mount (50) of the depth control wheels (36).

8. The implement according to one of the previous claims, **characterised in that** a measuring means for the detection of a forward drive or backward drive is mounted on the implement (10) and **in that** the limiting element (52) is controllable based on the detected forward drive or backward drive.

9. The implement according to one of the previous claims, **characterised in that** the at least one guide element (18) is mounted on the central frame (12) to be swivelable about an upright swivel axle (40), wherein the at least one guide element (18) and the depth control wheels (36) have different swivel angles α during cornering.

10. The implement according to one of the previous claims, **characterised in that** the first axis of rotation (22) and the second axis of rotation (42) have a horizontal alignment that is oriented transverse to the driving direction or **in that** they are oriented transverse to the driving direction or **in that** they have an alignment that is oriented diagonal in space and transverse to the driving direction.

## Revendications

1. Outil de travail agricole (10) susceptible d'être tracté, doté d'un châssis central (12) présentant un dispositif de liaison (14), des cadres latéraux (28) pivotants autour d'axes (26) parallèles au sens de marche et/ou obliques dans l'espace étant agencés latéralement par rapport audit châssis central (12), au moins un élément de guidage (18) roulant sur une terre de culture étant monté sur le châssis central (12) et/ou à côté du dispositif de liaison (14), ainsi qu'au moins une roue de guidage en profondeur (36) roulant sur ladite terre de culture étant respectivement montée sur le cadre latéral (28), lesdites roues de guidage en profondeur (36) étant disposées pivotantes autour d'un axe de pivotement (40) redressé, à l'aide d'une fixation articulée (50), les roues de guidage en profondeur (36) étant fixées à ladite fixation articulée (50) par des moyeux présentant chacun un deuxième axe de rotation (42) et ledit deuxième axe de rotation (42) des roues de guidage en profondeur (36) étant dans le plan ou attenants au plan de l'axe de pivotement (40), et ledit au moins un élément de guidage (18) étant fixé au châssis central (12) par un moyeu (24) présentant un premier axe de rotation (22), ledit premier axe de rotation (22) et ledit deuxième axe de rotation (42) horizontal présentant un décalage axial l'un par rapport à l'autre, **caractérisé en ce que** ledit outil de travail (10) est conçu de sorte que les roues de guidage en profondeur (36) pivotantes autour d'un axe de pivotement (40) redressé sont librement pivotantes lorsque l'outil de travail (10) est en marche avant, et que les roues de guidage en profondeur (36) pivotantes autour d'un axe de pivotement (40) redressé sont mises, à l'aide d'un élément de limitation (52), dans un sens au moins principalement parallèle audit au moins un élément de guidage (18) lorsque l'outil de travail (10) est en marche arrière.

2. Outil de travail selon la revendication 1, **caractérisé en ce que** l'axe de pivotement redressé (40) des roues de guidage en profondeur (36) s'étend du haut - à l'arrière vers le bas - à l'avant, et/ou que l'axe de pivotement (40) des roues de guidage en profondeur (36) est incliné par rapport à un axe vertical respectif, cette inclinaison étant notamment de 15° à 75°.

3. Outil de travail selon la revendication 1 ou 2, **caractérisé en ce que** l'angle de pivotement α des roues de guidage en profondeur (36) pivotantes autour d'un axe de pivotement (40) redressé est limité au moins dans un sens de rotation lorsque l'outil de travail (10) est en marche avant, ledit angle de pivotement α étant d'autant plus grand que le décalage du premier axe de rotation (22) horizontal par rapport au deuxième axe de rotation (42) horizontal est élevé.

4. Outil de travail selon l'une quelconque des revendications précédentes, **caractérisé en ce que** l'élément de limitation (52) est réalisé en tant qu'entraînement linéaire.

5. Outil de travail selon l'une quelconque des revendications précédentes, **caractérisé en ce que** ledit au moins un élément de guidage (18) est réalisé en tant que chariot à chenille (20).

6. Outil de travail selon l'une quelconque des revendications précédentes, **caractérisé en ce que** les roues de guidage en profondeur (36) sont susceptibles d'être réglées en hauteur.

7. Outil de travail selon l'une quelconque des revendications précédentes, **caractérisé en ce qu'**un entraînement linéaire et/ou un entraînement par broches sont associés à la fixation articulée (50) des roues de guidage en profondeur (36).

8. Outil de travail selon l'une quelconque des revendications précédentes, **caractérisé en ce qu'**un moyen de mesure est monté sur l'outil de travail (10) pour détecter une marche avant ou marche arrière, et que l'élément de limitation (52) peut être commandé sur la base de la marche avant ou marche arrière détectée.

9. Outil de travail selon l'une quelconque des revendications précédentes, **caractérisé en ce que** ledit au moins un élément de guidage (18) est monté sur le châssis central (12) de manière pivotante autour d'un axe de pivotement (40) redressé, ledit au moins un élément de guidage (18) et les roues de guidage en profondeur (36) présentant des angles de pivotement α différents au cours d'une marche à virages.

10. Outil de travail selon l'une quelconque des revendications précédentes, **caractérisé en ce que** le premier axe de rotation (22) et le deuxième axe de rotation (42) présentent un sens horizontal orienté à la transversale du sens de marche, ou qu'ils sont orientés obliquement par rapport au sens de marche ou qu'ils présentent un sens oblique dans l'espace et orienté à la transversale du sens de marche.
